# EUROPEAN PATENT SPECIFICATION

(11) **EP 0 627 745 B1**
(45) Date of publication and mention of the grant of the patent: **14.10.1998**
(21) Application number: 94108528.4
(22) Date of filing: 03.06.1994
(51) Int. Cl.: H01B 1/12, C08G 73/02

(54) **Conductive plastics material and a method for its preparation**
Leitfähiges Kunststoffmaterial und Verfahren zur Herstellung desselben
Matériau plastique conducteur et méthode pour sa préparation

(30) Priority: 04.06.1993 FI 932578
(43) Date of publication of application: 07.12.1994
(73) Proprietor: NESTE OY, 02150 Espoo (FI)
(72) Inventor: Kirmanen, Pauli, SF-06450 Provoo (FI); Savolainen, Eski, SF-15880 Hollola (FI); Virtanen, Esa, SF-06100 Provoo (FI)
(74) Representative: Hansen, Bernd, Dr. Dipl.-Chem.

(56) References cited:
- EP-A- 0 582 919
- WO-A-92/22911

## Description

The invention relates to an electrically conductive polymer material which contains a polyaniline or derivative thereof doped with a protonic acid, and a method for its production. By the method according to the invention, a conductive polymer material is obtained the acidity of which is substantially reduced, the conductivity of which is sufficiently high, and which is suitable, for example, for being melt-processed in conventional plastics processing apparatus.

Electrically conductive polymers are at present subject to great interest in different parts of the world. These polymers can be used for replacing metal conductors and semiconductors in a number of applications, such as batteries, sensors, switches, light cells, circuit boards, heating elements, electrostatic discharge elimination (ESD), and electromagnetic interference shielding (EMI). The advantages of conductive polymers over metals include their light weight, mechanical properties, corrosion resistance, and less expensive synthesis and processing methods.

Electrically conductive plastics can be divided roughly into two categories: filled conductive plastics, in which a conductive filler, such as carbon black or soot, carbon fiber or metal powder is added to a thermosetting or thermoplastic resin, and intrinsically conductive plastics, which are based on polymers which have been rendered electrically conductive by oxidation, reduction or protonation (doping).

The electrical conductivity of filled conductive polymers is dependent on mutual contacts between the conductive filler particles. Usually a well dispersed filler is needed at approx. 10 - 50 wt.% to produce composites having a good conductance. However, such conductive composites involve problems; their mechanical and certain of their chemical properties are crucially impaired as the filler content increases and the polymer content decreases, their conductivity is difficult to control especially within the semiconductor range, and stable and homogenous dispersing of their filler into the matrix plastic is difficult.

Intrinsically conductive plastics can be prepared from organic polymers containing long conjugated chains formed by double bonds and heteroatoms. The polymers can be rendered conductive by modifying the π- and π-p-electron systems in their double bonds and heteroatoms by adding to the polymer certain blending or doping agents which will serve as electron receptors or electron donors in the polymer. Thereby electron holes or extra electrons are formed in the polymer chain, enabling electric current to travel along the conjugated chain.

An advantage of the intrinsically conductive plastics is the ease of varying their conductivity as a function of the amount of the doping agent, i.e. the degree of doping, especially within low conductivity ranges. On the other hand, achieving low conductivities with filled conductive plastics is difficult. Examples of currently known intrinsically conductive polymers include polyacetylene, poly-p-phenylene, polypyrrole, polythiophene and its derivatives, and polyaniline and its derivatives.

There are two principal methods for processing polymers into the desired pieces, fibers, films, etc., i.e. melt processing and solution processing. Melt processing is a versatile processing method, whereas solution processing is suitable mainly for the preparation of fibers and films but not profiled pieces. However, the processing and doping of most intrinsically conductive polymers involve problems with respect to the handling, stability, homogeneity, etc., of the materials.

Polyaniline with its derivatives is in particular a technically and commercially promising intrinsically conductive polymer. An aniline polymer or a derivative thereof is made up of aniline monomers or derivatives thereof, the nitrogen atom of which is bonded to the para-carbon of the benzene ring of the subsequent unit. Unsubstituted polyaniline may appear in a number of forms, including leucoemeraldine, protoemeraldine, emeraldine, nigraline, and toluprotoemeraldine forms. For conductive polymer applications, the emeraldine form is generally used, having the formula 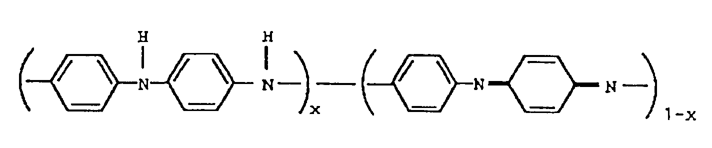 wherein X is approx. 0.5.

According to state-of-the-art technology, the doping of polyaniline is usually carried out by using protonic acids, which include HCl, H₂SO₄, HNO₃, HClO₄, HBF₄, HPF₆, HF, phosphoric acids, sulfonic acids, picrinic acid, n-nitrobenzoic acid, dichloroacetic acid, and polymer acids. Preferably the doping is carried out using sulfonic acid or its derivatives, such as dodecylbenzenesulfonic acid (DBSA). The protonization is focussed on the iminic nitrogen atoms in the aniline units according to the formula presented above, approx. 50 % of the N atoms of polyaniline thus being such atoms. Examples of publications in the field include US Patent publications 3 963 498, 4 025 463, and 4 983 322. The doping of the literature in the field.

US Patent 5,232,631 discloses processible polyaniline compositions and blends that exhibit much lower percolation thresholds, sometimes even below 1 % w/w, of conductive polyaniline. The patent relates to conductive polymers and particularly to the use of functionalized protonic acids to induce processibility of electrically conductive polyanilines, and to induce solubility of electrically conductive polyanilines in organic liquids or fluid (melt) phases of solid polymers.

However, the processing a doped polyaniline having good conductivity properties by versatile melt-processing methods has involved problems, to which solutions have been sought. The mixture of polyaniline or a derivative thereof and a doping protonic acid is an indefinite, staining, strongly corrosive, viscous, fluid or paste-like, dispersion-type material which is difficult to handle. A significant improvement to the preparation of a polyaniline-based, melt-processable conductive polymer having good conductivity and other properties are disclosed in EP Patent Application 545729. According to the invention disclosed in the said Application, a solid, electrically conductive plastics material with good properties is obtained by first contacting the polyaniline or a derivative thereof with a doping protonic acid and by thereafter heat-treating the reaction product or mixture at a temperature of approx. +40 - +250 °C. The heat treatment renders the above-described preprotonized mixture of polyaniline or a derivative thereof and a doping protonic acid, which is difficult to handle, a homogenous, solid, relatively inert powder or granular material which is easy to handle and is suitable for use in, for example, various melt processing methods.

Polyaniline doped with a functionalized protonic acid has proved to be highly usable when it contains an excess of the protonic acid, such as the above-mentioned sulfonic acid or a derivative thereof, i.e. the mixture contains acid not only sufficiently for the doping but also for the plasticization of the mixture. When protonic acid is used in this manner in excess, effective doping of polyaniline is obtained and, additionally, the doped polyaniline becomes a material suitable for melt processing, since the protonic acid plays the said two roles in the mixture. When protonic acid is used in this manner in excess, the result is a doped polyaniline which has an acidic pH value. However, acidity encumbers the use of the conductive polymer in most applications. In addition to acidic products corroding and contaminating other composite plastics components and the environment, acid material to be processed damages the equipment, such as melt-processing apparatus, by corroding it, in which case the applications of a conductive material good as such remain few in practice.

State-of-the-art publications have almost completely overlooked the problem of acidity. On the other hand, it is evident in the state of the art that mere mixing together of a polyaniline of the emeraldine base form and a doping agent such as dodecylbenzenesulfonic acid will not suffice to produce a homogenous mixture; the result is the above-mentioned mixture or dispersion which is difficult to handle. In state-of-the-art publications, sufficient mixing and doping has in general been effected by dissolving the parts of the mixture in the same solvent. Examples of the state-of-the-art publications concerning this include US Patent publication 5 006 278. In addition, the methods disclosed in the state-of-the-art publications in general use solution processing, cf. WO Patents 8901694 and 9013601, in which case the acidity problem will not cause as much harm as in melt processing methods for which the polyaniline-based conductive material according to the present invention is especially suitable. In addition, it can be stated that acidity is not especially problematic in all applications, such as accumulators and batteries.

One way of reducing the acidity of a conductive polymer material which contains polyaniline doped with a protonic acid, preferably sulfonic acid and most preferably dodecylbenzenesulfonic acid, is disclosed in EP Patent Application 582919. According to the method disclosed in this publication, a certain additive is used for the neutralization of polyaniline or its derivative doped with a protonic acid, and also for its plasticization and/or stabilization. According to the method of the said publication, a mixture containing polyaniline doped with a protonic acid can be rendered more plastic, more stable and more neutral by adding to the mixture a metal compound or by treating the doped polyaniline with a metal compound. The metal compound can be selected from among numerous alternatives, according to the desired property to be emphasized. The compounds may be oxides, hydroxides, halides, or equivalent. In the invention disclosed, it is noted that the most advantageous are the compounds of zinc, of which zinc oxide ZnO has been found to be the most suitable. According to a preferred embodiment, the metal compound is allowed to react first with any acid which, together with the metal compound, forms a compound which substantially neutralizes, stabilizes and plasticizes doped polyaniline. The acid reacting with the metal compound need not be the same as the protonic acid to be used for the doping of polyaniline. However, using as the acid reacting with the metal compound the same protonic acid as is used for the doping of the polyaniline has proved to be a preferred embodiment. The mixing of the ingredients is carried out preferably in a melt mixing apparatus, for example by means of a kneader, a compounder, or a screw mixer, at a temperature of approx. 50 - 200 °C.

The object of the present invention is to prepare a conductive polymer material which contains a polyaniline, preferably of the emeraldine form, doped with a protonic acid, preferably sulfonic acid, most preferably dodecylbenzenesulfonic acid, the acidity of the conductive polymer having been substantially reduced, i.e. to a pH range above 2, preferably to a pH range of 3 - 8, and most preferably to a pH range of 5 - 7, the conductivity of the polymer nevertheless remaining at a sufficiently high level. The conductivity remaining at a sufficiently high level in spite of the neutralization treatment is a significant improvement over the neutralization method according to the above-mentioned EP application 582919. By the method of the present invention, a significant improvement is achieved over the method disclosed in the above-mentioned publication with respect to the pH range also so that the adjustability of the pH value becomes possible even within a low pH range, without affecting the conductivity of the polymer. It has been shown that if only a zinc compound as a metal compound, such as zinc oxide, is used together with an acid, the result may be, in spite of stoichiometric proportions of the ingredients, too acidic a product, the acidity of which can now be substantially reduced by the method according to the present invention. It is a further advantage of the method according to the present invention that the final product obtained will be of a more uniform acidity than in the method according to the publication mentioned above. A further object of the present invention is to provide a processable electrically conductive polymer material which may be used in electric or electronic devices, or applications.

The above-mentioned advantageous acidity limits (pH 3 - 8) achievable by the method according to the invention can, however, be further widened for certain specialized applications. For certain purposes, conductive plastics mixtures having a pH even below 3 or above 8 can be used, and such plastics mixtures can be arrived at by a suitable selection of the matrix polymers to be mixed with the conductive polymer material.

The conductive polymer composition according to the present invention thus has wider areas of use, since, owing to the consistently and substantially higher pH range of the composition, it is considerably more suitable for being used in various processing apparatus than previously known polyaniline conductive polymer compositions. Furthermore, the adjustability of the pH range and the conductivity of the conductive polymer concerned remaining at a sufficiently high level in spite of the steps it is subjected to according to the invention further widen the applications of the polyaniline-based conductive polymer composition according to the invention. Such a polymer material, which has a substantially higher pH value and contains a polyaniline doped with a protonic acid, is thus characterized in what is stated in the characterizing clause of Claim 1. The polymer of the present invention can be used in electric or electronic devices, or applications, to good effect, in particular in regard to batteries, sensors, switches, light cells, circuit boards, heating elements, electrostatic discharge elimination or electromagnetic interference shielding.

According to the present invention it has now, surprisingly, been observed that, when a conductive polymer complex made up of a polyaniline doped with a protonic acid and a reaction product formed by a zinc compound and an acid additionally contains an additional neutralizing compound which is not a zinc compound, a conductive polymer material is obtained the pH range of which is adjustable and the pH range of which is adjusted to a substantially higher pH range (pH approx. 3 - 8, preferably 5 - 7), the adjusted pH value of which remains consistently the same in the entire product, and the level of conductivity of which remains high in spite of the additives. The present invention relates in particular to the neutralizing, with an additional neutralizing compound, of a conductive polymer complex made up of a polyaniline, preferably of the emeraldine form, doped with sulfonic acid, and of a compound formed by a zinc compound and a protonic acid. In its most preferred embodiment the invention relates to the neutralization, with calcium carbonate CaCO₃, of a emeraldine-form polyaniline doped with dodecylbenzenesulfonic acid and a compound formed by zinc oxide ZnO and likewise dodecylbenzenesulfonic acid. Dodecylbenzenesulfonic acid acts in the complex both as a doping agent and as a plasticizer of the complex. The plasticizing agent used may also consist of other agents commonly used for the plasticizing of polymers. Examples of such plasticizing agents include water, alcohols such as methanol, ethanol, propanols or benzyl alcohols, ethers such as diethylether, ketones such as acetone or acetophenone, phenols, amines, esters, fluorinated carboxylic and sulfonic acids, amides or phosphoramides. In the final product obtained after the treatments carried out on the mixture made up of the above-mentioned complex and a additional neutralizing compound, i.e. mixing, solidification, etc., the proportion of the plasticizing agents is insignificant.

The use of an additional neutralizing compound, preferably calcium carbonate, together with a zinc compound, for the neutralization of doped polyaniline is thus advantageous not only for achieving consistent and sufficient neutralization and pH adjustability, but also for retaining the level of conductivity. It can be shown that the mere increasing of the amount of the zinc compound, such as zinc oxide, in order to improve the result of neutralization will result in a dramatic lowering of the level of conductivity. On the other hand, when additional neutralizing compound is used this does not happen; the level of conductivity remains high for a long time, and if additional neutralizing compound is added further, the conductivity level drops only gradually and not suddenly and dramatically as it does when mere zinc oxide is used.

According to the present invention, additional neutralizing compound, preferably in the form of a basic metal salt, such as a metal carbonate, hydrogencarbonate, oxide or hydroxide, for example calcium carbonate CaCO₃, is thus used for adjusting the pH of the doped polyaniline. The basic moiety of the neutralizing compound may be the same or different to that of the aforementioned metal compound. The obtained final product, a conductive polymer complex with a higher pH value, thus has the following ingredients: a polyaniline which is preferably of the emeraldine form; a protonic acid, most preferably sulfonic acid or a derivative thereof, used for the doping of the former; a zinc compound, used for the neutralization; and a additional (different) neutralizing compound, preferable carbonate compound, most preferably calcium carbonate, used for improving the result of neutralization. It is possible, when so desired, to mix a conductive polymer complex made up of these ingredients with an insulating polymer matrix material in order to produce an electrically conductive plastics mixture. Such a matrix material may be a thermosetting plastic, a thermoplast, or an elastomeric polymer. The matrix material should be compatible with the conductive polymer and be melt processable within the same temperature ranges as the conductive polymer itself. The matrix polymer is preferably a thermoplastic homo- or copolymer based on olefins, styrene, vinyl polymers or acrylic polymers, or a mixture thereof, or a thermoplastic condensation polymer. Examples of matrix polymers most commonly used include polyethylene, polypropylene, styrenebutadiene, polyester, polyamide, acryl-butyl-styrene, and polycarbonate. From both the technological and the economical viewpoint it is preferable to aim at making the proportion of the conductive polymer complex in the plastics mixture as small as possible. A conductive polymer complex is expensive, and on the other hand the mechanical properties of the entire plastics mixture will be better if the proportion of the conductive polymer complex in the mixture is as small as possible. The proportion of conductive polymer complex in the plastics mixture may be within a range of approx. 1 - 60 wt.%, preferably approx. 1 - 40 wt.%, and most preferably 5 - 15 wt.%. As regards the plastics mixtures of the conductive polymer material and matrix materials, reference is also made to EP application 582919, mentioned above.

According to the method of the present invention, the proportion of the additional neutralizing agent calculated as calcium carbonate (i.e. corresponding to the equivalent number of moles of neutralizing compound as that calculated for a given weight % calcium carbonate) is added in order to improve the result of the neutralizing of the conductive polymer in the final-product conductive polymer complex may vary from approx. 0.1 percent by weight to approx. 20 percent by weight. Preferably calcium carbonate is added at approx. 0.5 - 8 wt.%, and most preferably at 1 - 2 wt.% of the total amount of the mixture.

When used in accordance with the invention, the additional neutralizing compound has an advantageous effect not only on the pH values of the conductive polymer material and the retaining of its conductivity level, but also on its impact strength. In practical applications this can best be observed when the conductive polymer is mixed with insulating plastics materials such as those mentioned above. When a additional neutralizing compound, preferably calcium carbonate, is used, the melt-processed conductive plastic pieces obtained will be stronger and more durable. In other words, plastics mixture pieces which are made of conductive and insulating polymer and which contain calcium carbonate only 0.3 wt.% or even less, have a considerably higher impact strength than have pieces which do not contain a calcium carbonate. For example, with a calcium carbonate amount of 0.3 wt.%, an improvement up to 30 % is obtained in the Izod impact strength (kJ/m²) in a plastics mixture which contains conductive polymer material approx. 15 wt.% and matrix polymer 85 wt.%.

The other preferred ingredients in the conductive polymer complex obtained as the final product were thus - before its being mixed with the matrix polymer: an emeraldine-form doped polyaniline; dodecylbenzenesulfonic acid DBSA; and zinc oxide. The amount of polyaniline is approx. 1 - 30 wt.%, preferably approx. 4 - 20 wt.%, the amount of DBSA approx. 50 - 95 wt.%, preferably approx. 70 - 90 wt.%, and the amount of zinc oxide approx. 1 - 10 wt.%, preferably approx. 1,5 - 8 wt.%. The amount of calcium carbonate was 0.1 - 20 wt.%, preferably approx. 0.5 -15 wt.%, most preferably 1 - 10 wt.%. If a final product having a composition such as this is mixed with a matrix polymer, its proportion in their mixture is approx. 1 - 60 wt.%, preferably 1 - 40 wt.%, and most preferably 5 - 15 wt.%.

A preferred composition for a plastics mixture suitable for ESD applications made by injection molding may be, for example, one which contains conductive polymer complex approx. 15 wt.% and matrix polymer approx. 85 wt.%. Such a plastics mixture thus preferably contains polyaniline approx. 1 wt.%, DBSA approx. 12.5 wt.%, ZnO approx. 1.3 wt.% and CaO₃ 0.2 wt.%, as well as matrix polymer approx. 85 wt.%.

An other preferred composition for a plastics mixture suitable for EMI applications may be, for example, one which contains conductive polymer complex approx. 20 - 40 wt.% and matrix polymer approx. 60 - 80 wt.%. Such a plastics mixture thus preferably contains polyaniline approx. 2 - 5 wt.%, DBSA approx. 20 - 30 wt.%, ZnO approx. 0,5 - 1,5 wt.% and CaCO₃ 0.4 - 3 wt.%, as well as matrix polymer approx. 60 - 80 wt.%.

The ingredients of the conductive polymer material may be mixed with each other by using various mixers, kneaders, etc. In a preferred embodiment the mixing is carried out using a screw mixer. The ingredients may be mixed with each other in a number of different orders. First, it is possible to introduce the ingredients, i.e. the polymer, the protonic acid used as the doping agent, the zinc compound, the acid which forms a compound with the metal compound, and the additional neutralizing compound which improves the result of neutralization, all at the same time and then to mix them preferably by using a screw mixer. Second, for example, it is possible to mix together the zinc compound and the acid which forms a compound with it, and to add to this blend the additional neutralizing compound, and to add the mixture thus obtained to a mixture of the polymer and the doping acid. In one embodiment, the polymer and the doping acid are first mixed together, and the additional neutralizing compound is added to this mixture. The compound formed by the zinc compound and the acid is then added to the mixture obtained. Furthermore, it is possible to carry out the mixing by adding to a blend of the polymer and the doping acid one portion of the compound formed by the zinc compound and the acid and by adding the additional neutralizing compound to another portion of the compound formed by the zinc compound and the acid, and the latter mixture thus obtained is added to the mixture containing the polymer. Furthermore, it is possible first to mix the zinc compound and the additional neutralizing compound and to mix this blend with the, and to add the mixture thus obtained to a mixture of the polymer and the doping acid. One further alternative order of adding the ingredients is that a portion of the additional neutralizing compound is added to a portion of the compound formed by the zinc compound and the acid, and this mixture is added to a mixture of the polymer and the doping agent. The remainder of the mixture formed by the zinc compound and acid and the additional neutralizing compound is added to the mixture thus obtained. In preferred embodiments, the same acid, which is preferably, for example, dodecylbenzenesulfonic acid, is used both as the acid which forms a compound with zinc compound and as the doping acid. In this case it is possible further to carry out the mixing by mixing all of the DBSA and the zinc compound and to add to this mixture the additional neutralizing compound which improves the result of neutralization. The polymer is then added to the mixture thus obtained, which contains DBSA in excess. In practice the mixings can be carried out in such a manner that some of the preliminary mixtures are made by using, for example, kneaders, and these are combined and the actual mixing, together with the heat treatment, is carried out, for example, in the screw mixer mentioned above.

The extrusion of the conductive polymer complex is preferably carried out for example by running the mixture through the screw mixer once or several times, the temperatures being approx. 50 - 400 °C, preferably 80 - 300 °C, and most preferably 100 - 200 °C. The same procedure is used in the extrusion as has been disclosed in EP patent applications 545729 and 582919.

The following examples illustrate the present invention in greater detail.

Reference example, without calcium carbonate A conductive polymer complex which contained emeraldine polyaniline 16 w-%, DBSA 64 w-% and ZnO 20 w-% was prepared by extruding the mixture of these components three times at 170°C with screw speed 50 rpm. This conductive polymer complex was mixed in an amount of 25 w-% with Neste Oy's high density polyethylene NCPE 3415.

The experiment was repeated by mixing the same ingredients at the same ratios by using the same technique. The conductivities of the resulting two parallel blends deviated two decades indicating the difficulties encountered if conductive polymer complex is made without additional neutralizing agent.

### Example 1.

A conductive polymer complex which contained emeraldine polyaniline 7,6 w-%, DBSA 82,5 w-%, ZnO 9,1 w-% and CaCO₃ 0,8 w-% was prepared by extruding the mixture of these components three times at temperatures 165°C, 180°C and 180°C with screw speed 50 rpm. The pH obtained for the complex was 3,1 and its conductivity as measured by the 4-probe method was 3,5 E-2 S/cm.

### Example 2.

A conductive polymer complex which contained emeraldine polyaniline 7,5 w-%, DBSA 81,9 w-%, ZnO 9,0 w-% and CaCO₃ 1,6 w-% was prepared according to the example 1. The pH obtained for the complex was 5,2 and its conductivity as measured by the 4-probe method was 2,0 E-2 S/cm.

### Example 3

The conductive polymer complex according to Example 1 was mixed in an amount of 10 wt.% with HDPE manufactured by Neste Corporation (NCPE 3415), used as matrix polymer. The conductivity of rods injection molded from the polymer mixture thus obtained was 4.2 E-5 S/cm as measured by the 4-probe method.

### Example 4

The conductive polymer complex according to Example 2 was mixed in an amount of 10 wt.% with NCPE 3415. The conductivity of rods injection molded from the polymer mixture thus obtained was 3.1 E-5 S/cm as measured by the 4-probe method.

### Example 5

The conductive polymer complex according to Example 2 was mixed in an amount of 10 wt.% with a polystyrene used as matrix polymer (SB 735). The conductivity of rods injection molded from the polymer mixture thus obtained was 2.8 E-6 S/cm as measured by the 4-probe method.

### Example 6

A polymer mixture was prepared which contained polystyrene (SB 735) 75 wt.%; conductive polymer complex according to Example 2, without CaCO₃, 14.7 wt.%; styrene-ethylene-butadiene block polymer (SEBS, manufactured by Shell) 10 wt.%; and CaCO₃ 0.3 wt.%. The Izod notch impact strength of rods injection molded from the mixture was 6.4 kJ/m² at 23 °C.

### Example 7

A polymer mixture according to Example 5 was prepared, with no calcium carbonate addition. The Izod notch impact strength at 23 °C was only 4.9 kJ/m².

### Example 8

Three polymer mixtures were was prepared which contained HDPE polyethylene (NCPE 3415) 85 wt% and a conductive polymer complex prepared according to Example 1 which contained CaCO₃ a) 0 wt.%, b) 0.8 wt.%, and c) 1.6 wt.%. The impact strengths measured for the mixtures were a) 85.6 J/m, b) 91.3 J/m, and c) 96.6 J/m.

### Example 9.

A conductive polymer complex which contained emeraldine polyaniline 7,5 w-%, DBSA 82,0 w-%, ZnO 9,0 w-% and Na₂CO₃ 1,5 w-% was prepared according to example 1. The pH obtained for the complex was 6,0 and its conductivity as measured by the 4-probe method was 2,7 E-4 S/cm.

### Example 10.

A conductive polymer complex which contained emeraldine polyaniline 7,5 w-%, DBSA 81,0 w-%, ZnO 8,9 w-% and NaHCO₃ 2,6 w-% was prepared according to the example 1. The pH obtained for the complex was 5,9 and its conductivity as measured by the 4-probe method was 4,0 E-5 S/cm.

### Example 11.

A conductive polymer complex which contained emeraldine polyaniline 7,5 w-%, DBSA 82,2 w-%, ZnO 9,0 w-% and MgCO₃ 1,3 w-% was prepared according to the example 1. The pH obtained for the complex was 5,6 and its conductivity as measured by the 4-probe method was 1,0 E-2 S/cm.

### Example 12.

A conductive polymer complex which contained emeraldine polyaniline 7,5 w-%, DBSA 81,3 w-%, ZnO 8,9 w-% and SrCO₃ 2,3 w-% was prepared according to the example 1. The pH obtained for the complex was 6,2 and its conductivity as measured by the 4-probe method was 2,1 E-3 S/cm.

### Example 13.

A conductive polymer complex which contained emeraldine polyaniline 7,5 w-%, DBSA 81,7 w-%, ZnO 9,0 w-% and MnCO₃ 1,8 w-% was prepared according to the example 1. The pH obtained for the complex was 6,1 and its conductivity as measured by the 4-probe method was 6,4 E-4 S/cm.

### Example 14.

A conductive polymer complex which contained emeraldine polyaniline 7,5 w-%, DBSA 80,6 w-%, ZnO 8,8 w-% and KHCO₃ 3,1 w-% was prepared according to the example 1. The pH obtained for the complex was 6,0 and its conductivity as measured by the 4-probe method was 1,2 E-3 S/cm.

### Example 15.

A conductive polymer complex which contained emeraldine polyaniline 7,5 w-%, DBSA 78,1 w-%, ZnO 8,5 w-% and Borax (Na₂B₄O₇*10 H₂O) 5,9 w-% was prepared according to the example 1. The pH obtained for the complex was 6,1 and its conductivity as measured by the 4-probe method was 1,1 E-4 S/cm.

### Example 16.

The conductive polymer complex prepared according to the example 9 was mixed in an amount of 10 w-% with NCPE 3415. The conductivity of the rods injection molded from the polymer mixture thus obtained was 2,1 E-6 S/cm as measured by the 4-probe method.

### Example 17.

The conductive polymer complex prepared according to the example 10 was mixed in an amount of 10 w-% with NCPE 3415. The conductivity of the rods injection molded from the polymer mixture thus obtained was 4,0 E-6 S/cm as measured by the 4-probe method.

### Example 18.

The conductive polymer complex prepared according to the example 11 was mixed in an amount of 10 w-% with NCPE 3415. The conductivity of the rods injection molded from the polymer mixture thus obtained was 2,5 E-6 S/cm as measured by the 4-probe method.

### Example 19.

The conductive polymer complex prepared according to the example 12 was mixed in an amount of 10 w-% with NCPE 3415. The conductivity of the rods injection molded from the polymer mixture thus obtained was 1,6 E-5 S/cm as measured by the 4-probe method.

### Example 20.

The conductive polymer complex prepared according to the example 13 was mixed in an amount of 10 w-% with NCPE 3415. The conductivity of the rods injection molded from the polymer mixture thus obtained was 1,3 E-5 S/cm as measured by the 4-probe method.

### Example 21.

The conductive polymer complex prepared according to the example 14 was mixed in an amount of 10 w-% with NCPE 3415. The conductivity of the rods injection molded from the polymer mixture thus obtained was 4,1 E-6 S/cm as measured by the 4-probe method.

### Example 22.

The conductive polymer complex prepared according to the example 15 was mixed in an amount of 10 w-% with NCPE 3415. The conductivity of the rods injection molded from the polymer mixture thus obtained was 1,7 E-6 S/cm as measured by the 4-probe method.

### Example 23.

A conductive polymer complex which contained emeraldine polyaniline 7,5 w-% , DBSA 81,2 w-%, ZnO 8,9 w-% and NH₄HCO₃ 2,4 w-% was prepared according to the example 1. This conductive polymer complex was mixed in an amount of 10 w-% with NCPE 3415. The conductivity of the rods injection molded from the polymer mixture thus obtained was lower than 1 E-9 S/cm.

### Example 24.

A conductive polymer complex which contained emeraldine polyaniline 7,5 w-%, DBSA 81,5 w-%, ZnO 8,9 w-% and K₂CO₃ 2,1 w-% was prepared according to the example 1. This conductive polymer complex was mixed in an amount of 10 w-% with NCPE 3415. The conductivity of the rods injection molded from the polymer mixture thus obtained was lower than 1 E-9 S/cm.

### Example 25.

A conductive polymer complex which contained emeraldine polyaniline 7,5 w-%, DBSA 82,3 w-%, ZnO 9,0 w-% and Ca(OH)₂ 1,2 w-% was prepared according to the example 1. This conductive polymer complex was mixed in an amount of 10 w-% with NCPE 3415. The conductivity of the rods injection molded from the polymer mixture thus obtained was lower than 1 E-9 S/cm.

## Claims

1. A processable, electrically conductive polymer material which contains a polyaniline or derivative thereof doped with a protonic acid, a zinc compound, and additionally a neutralizing compound which is not a zinc compound.

2. A conductive polymer material according to Claim 1, **characterized** in that the conductive polymer material additionally contains an acid which forms a compound with the zinc compound.

3. A conductive polymer material according to Claim 2, **characterized** in that the acid which forms a compound with the zinc compound and the protonic acid used for the doping of the polyaniline or derivative thereof are the same.

4. A conductive polymer material according to Claims 1, 2 or 3, **characterized** in that the protonic acid is an organic sulfonic acid or a derivative thereof, preferably dodecylbenzenesulfonic acid.

5. A conductive polymer material according to Claim 1, **characterized** in that the zinc compound is zinc oxide.

6. A conductive polymer material according to any of the preceding claims, wherein the basic moiety of the additional neutralizing compound is different to that of the zinc compound.

7. A conductive polymer material according to claim 6, wherein the additional neutralizing compound is a metal carbonate, hydrogencarbonate, oxide, hydroxide or is borax.

8. A conductive polymer material according to Claim 7, **characterized** in that the additionally neutralizing compound is a metal carbonate or hydrogencarbonate, preferably Na₂CO₃, NaHCO₃, K₂CO₃, KHCO₃, MgCO₃, CaCO₃, SrCO₃, MnCO₃ or compounds thereof.

9. A conductive polymer material according to any of the preceding Claims, **characterized** in that the pH of the conductive polymer material is within the range 3 - 8, preferably within the range 5 - 7.

10. A conductive polymer material according to any of the preceding Claims, **characterized** in that the level of conductivity of the conductive polymer material is higher than 10⁻⁹ S/cm, preferably higher than 10⁻⁶ S/cm, and most preferably higher than 10⁻³ S/cm.

11. A conductive polymer material according to any of the preceding Claims, **characterized** in that in the conductive polymer material the proportion of additional neutralizing compound is 0.1 - 10 wt.% as calculated for CaCO₃.

12. A conductive polymer material according to any of the preceding Claims, **characterized** in that the conductive polymer material contains polyaniline 4 - 20 wt.%, protonic acid 60 - 90 wt.%, as calculated for dodecylbenzenesulfonic acid (corresponding to an amount of acid possessing an equivalent quantity of acidic protons to a given weight % dodecylbenzene sulphonic acid), and metal compound 1 - 10 wt.%.

13. A processable, electrically conductive polymer material which contains a doped polyaniline or derivative thereof according to any of the preceding Claims, **characterized** in that the conductive polymer material may be combined with an insulating polymer matrix in order to obtain an electrically conductive plastics mixture.

14. A conductive polymer material according to Claim 13, **characterized** in that the insulating matrix polymer may be a thermoset, a thermoplast, or an elastomeric polymer.

15. A conductive polymer material according to Claims 13 or 14, **characterized** in that the insulating matrix polymer is preferably a thermoplastic homo- or copolymer based on olefins, styrene, vinyl polymers or acrylic polymers, or a mixture thereof, or a thermoplastic condensation polymer.

16. A conductive polymer material according to Claims 13, 14 or 15, **characterized** in that in the electrically conductive plastic mixture the proportion of electrically conductive polymer material is 1 - 60 wt.%, preferably 1 - 40 wt.%, and most preferably 5 - 15 wt.%.

17. A method for the preparation of an electrically conductive polymer material which contains a polyaniline or derivative thereof doped with a protonic acid, and a metal compound, **characterized** in that a polyaniline or a derivative thereof, a polymer-doping protonic acid, a zinc compound as said metal compound, an acid which forms a compound with the metal compound, and an additional neutralizing compound which is not a zinc compound are contacted with each other, and the mixture is heat-treated at a temperature of 50 °C - 400 °C, preferably 80 °C - 300 °C, and most preferably 100 °C - 200 ° C.

18. A method according to Claim 17, **characterized** in that the contacting is carried out by means of a melt mixer such as a screw mixer or a compounder.

19. A method according to Claims 17 or 18, **characterized** in that the doping protonic acid is preferably a sulfonic acid or a derivative thereof; the acid which forms a compound with the metal compound is preferably the same as the acid used for the doping of the polyaniline or its derivative; and the additional neutralizing compound is preferably calcium carbonate.

20. A method according to Claims 17, 18 or 19 for preparing a processable, electrically conductive polymer, **characterized** in that an electrically conductive polymer material is combined with an insulating polymer matrix by means of melt mixing devices such as a screw mixer or a compounder, at a temperature of 80 °C - 350 °C.

21. A processable electrically conductive polymer material according to any of Claims 1 - 16, **characterized** in that the adding of the additional neutralizing compound to the conductive polymer material improves the impact strength of the plastics mixture made up of the conductive polymer material and the insulating matrix polymer by up to 30 % if the conductive polymer material contains the neutralizing compound in an amount of 2 wt.% or less.

22. The use of a processable electrically conductive polymer material according to any one of claims 1 to 16 and 21, in electric or electronic devices or applications, such as batteries, sensors, switches, light cells, circuit boards, heating elements, electrostatic discharge elimination or electromagnetic interference shielding.

## Patentansprüche

1. Bearbeitbares, elektrisch leitendes Polymermaterial, umfassend ein Polyanilin oder Derivat davon, das mit einer Protonensäure dotiert ist, eine Zinkverbindung und zusätzlich eine Neutralisierverbindung, die keine Zinkverbindung ist.

2. Leitendes Polymermaterial nach Anspruch 1,
dadurch gekennzeichnet, daß das leitende Polymermaterial zusätzlich eine Säure enthält, die eine Verbindung mit der Zinkverbindung bildet.

3. Leitendes Polymermaterial nach Anspruch 2,
dadurch gekennzeichnet, daß die Säure, die eine Verbindung mit der Zinkverbindung bildet, und die Protonensäure, die zum Dotieren des Polyanilins oder des Derivates davon verwendet wird, gleich sind.

4. Leitendes Polymermaterial nach den Ansprüchen 1, 2 oder 3, dadurch gekennzeichnet, daß die Protonensäure eine organische Sulfonsäure oder ein Derivat davon, bevorzugt Dodecylbenzolsulfonsäure ist.

5. Leitendes Polymermaterial nach Anspruch 1,
dadurch gekennzeichnet, daß die Zinkverbindung Zinkoxid ist.

6. Leitendes Polymermaterial nach einem der vorhergehenden Ansprüche, worin der basische Anteil der zusätzlichen Neutralisierverbindung von dem der Zinkverbindung verschieden ist.

7. Leitendes Polymermaterial nach Anspruch 6, worin die zusätzliche Neutralisierverbindung ein Metallcarbonat, -hydrogencarbonat, -oxid, -hydroxid oder Borax ist.

8. Leitendes Polymermaterial nach Anspruch 7,
dadurch gekennzeichnet, daß die zusätzliche Neutralisierverbindung ein Metallcarbonat oder -hydrogencarbonat, bevorzugt Na₂CO₃, NaHCO₃, K₂CO₃, KHCO₃, MgCO₃, CaCO₃, SrCO₃, MnCO₃ oder Verbindungen davon ist.

9. Leitendes Polymermaterial nach einem der vorhergehenden Ansprüche, dadurch gekennzeichnet, daß der pH des leitenden Polymermaterials innerhalb des Bereiches von 3 bis 8, bevorzugt innerhalb des Bereiches von 5 bis 7 liegt.

10. Leitendes Polymermaterial nach einem der vorhergehenden Ansprüche, dadurch gekennzeichnet, daß der Grad der Leitfähigkeit des leitenden Polymermaterials höher als 10⁻⁹ S/cm, bevorzugt höher als 10⁻⁶ S/cm und am meisten bevorzugt höher als 10⁻³ S/cm ist.

11. Leitendes Polymermaterial nach einem der vorhergehenden Ansprüche, dadurch gekennzeichnet, daß in dem leitenden Polymermaterial der Anteil der zusätzlichen Neutralisierverhindung 0,1 bis 10 Gew.%, berechnet für CaCO₃, ist.

12. Leitendes Polymermaterial nach einem der vorhergehenden Ansprüche, dadurch gekennzeichnet, daß das leitende Polymermaterial 4 bis 20 Gew.% Polyanilin, 60 bis 90 Gew.% Protonensäure, berechnet für Dodecylbenzolsulfonsäure (entsprechend einer Menge an Säure, die eine äquivalente Menge an sauren Protonen für einen gegebenen Gewichtsprozentsatz Dodecylbenzolsulfonsäure aufweist) und 1 bis 10 Gew.% der Metallverbindung enthält.

13. Bearbeitbares, elektrisch leitendes Polymermaterial, umfassend ein dotiertes Polyanilin oder ein Derivat davon nach einem der vorhergehenden Ansprüche, dadurch gekennzeichnet, daß das leitende Polymermaterial mit einer isolierenden Polymermatrix kombiniert werden kann, unter Erhalt einer elektrisch leitenden Kunststoffmischung.

14. Leitendes Polymermaterial nach Anspruch 13, dadurch gekennzeichnet, daß das Isoliermatrixpolymer ein aushärtbares Polymer, ein Thermoplast oder ein elastomeres Polymer sein kann.

15. Leitendes Polymermaterial nach Anspruch 13 oder 14, dadurch gekennzeichnet, daß das Isoliermatrixpolymer bevorzugt ein thermoplastisches Homo- oder Copolymer, basierend auf Olefinen, Styrol, Vinylpolymeren oder Acrylpolymeren, oder eine Mischung davon oder ein thermoplastisches Kondensationspolymer ist.

16. Leitendes Polymermaterial nach den Ansprüchen 13, 14 oder 15, dadurch gekennzeichnet, daß in der elektrisch leitenden Kunststoffmischung der Anteil des elektrisch leitenden Polymermaterials 1 bis 60 Gew.%, bevorzugt 1 bis 40 Gew.% und am meisten bevorzugt 5 bis 15 Gew.% ist.

17. Verfahren zur Herstellung eines elektrisch leitenden Polymermaterials, umfassend ein Polyanilin oder Derivat davon, dotiert mit einer Protonensäure, und eine Metallverbindung, dadurch gekennzeichnet, daß ein Polyanilin oder ein Derivat davon, eine Polymer-dotierende Protonensäure, eine Zinkverbindung als Metallverbindung, eine Säure, die eine Verbindung mit der Metallverbindung bildet, und eine zusätzliche Neutralisierverbindung, die keine Zinkverbindung ist, miteinander in Kontakt gebracht und die Mischung bei einer Temperatur von 50 bis 400°C, bevorzugt 80 bis 300°C und am meisten bevorzugt 100 bis 200°C wärmebehandelt wird.

18. Verfahren nach Anspruch 17, dadurch gekennzeichnet, daß das Kontaktieren mit Hilfe eines Schmelzmischers wie eines Schraubenmischers oder einer Verbundmaschine durchgeführt wird.

19. Verfahren nach den Ansprüchen 17 oder 18,
dadurch gekennzeichnet, daß die dotierende Protonensäure bevorzugt eine Sulfonsäure oder ein Derivat davon ist; die Säure, die eine Verbindung mit der Metallverbindung bildet, bevorzugt die gleiche ist wie die Säure, die zum Dotieren des Polyanilins oder dessen Derivates verwendet wird; und die zusätzliche Neutralisierverbindung bevorzugt Calciumcarbonat ist.

20. Verfahren nach den Ansprüchen 17, 18 oder 19 zur Herstellung eines verarbeitbaren, elektrisch leitenden Polymers, dadurch gekennzeichnet, daß ein elektrisch leitendes Polymermaterial mit einer Isolierpolymermatrix durch Schmelzmischgeräte wie einem Schraubenmischer oder einer Verbundmaschine bei einer Temperatur von 80 bis 350°C kombiniert wird.

21. Verarbeitbares elektrisch leitendes Polymermaterial nach einem der Ansprüche 1 bis 16, dadurch gekennzeichnet, daß die Zugabe der zusätzlichen Neutralisierverbindung zu dem leitenden Polymermaterial die Schlagfestigkeit der Kunststoffmischung, die aus dem leitenden Polymermatrial und dem Isoliermatrixpolymer hergestellt ist, um bis zu 30% verbessert, wenn das leitende Polymermatrial die Neutralisierverbindung in einer Menge von 2 Gew.% oder weniger enthält.

22. Verwendung eines verarbeitbaren, elektrisch leitenden Polymermaterials nach einem der Ansprüche 1 bis 16 und 21, in elektrischen oder elektronischen Geräten oder Anwendungen wie Batterien, Sensoren, Schaltern, Lichtzellen, gedruckten Schaltungen, Heizelementen, elektrostatischen Entladungseliminierung oder elektromagnetischen Interferenzabschirmung.

## Revendications

1. Matériau polymère conducteur d'électricité transformable, qui contient une polyaniline ou un dérivé de celle-ci, dopé avec un acide protonique, un composé de zinc et, de manière additionnelle, un composé neutralisant qui n'est pas un composé de zinc.

2. Matériau polymère conducteur selon la revendication 1, caractérisé en ce que le matériau polymère conducteur contient, de manière additionnelle, un acide qui forme un composé avec le composé de zinc.

3. Matériau polymère conducteur selon la revendication 2, caractérisé en ce que l'acide qui forme un composé avec le composé de zinc et l'acide protonique utilisé pour doper la polyaniline ou un dérivé de celle-ci, sont les mêmes.

4. Matériau polymère conducteur selon la revendication 1, 2 ou 3, caractérisé en ce que l'acide protonique est un acide sulfonique organique ou un dérivé de celui-ci, de préférence l'acide dodécylbenzène sulfonique.

5. Matériau polymère conducteur selon la revendication 1, caractérisé en ce que le composé de zinc est l'oxyde de zinc.

6. Matériau polymère conducteur selon l'une quelconque des revendications précédentes, dans lequel le groupe basique du composé neutralisant additionnel est différent de celui du composé de zinc.

7. Matériau polymère conducteur selon la revendication 6, dans lequel le composé neutralisant additionnel est un carbonate, un hydrogénocarbonate, un oxyde ou un hydroxyde d'un métal, ou le borax.

8. Matériau polymère conducteur selon la revendication 7, caractérisé en ce que le composé neutralisant additionnel est un carbonate ou un hydrogénocarbonate de métal, de préférence Na₂CO₃, NaHCO₃, K₂CO₃, KHCO₃, MgCO₃, CaCO₃, SrCO₃, MnCO₃ ou leurs composés.

9. Matériau polymère conducteur selon l'une quelconque des revendications précédentes, caractérisé en ce que le pH du matériau polymère conducteur est dans la plage 3 - 8, de préférence dans la plage 5 - 7.

10. Matériau polymère conducteur selon l'une quelconque des revendications précédentes, caractérisé en ce que le niveau de la conductivité du matériau polymère conducteur est supérieur à 10⁻⁹ S/cm, de préférence supérieur à 10⁻⁶ S/cm et, encore mieux, supérieure à 10⁻³ S/cm.

11. Matériau polymère conducteur selon l'une quelconque des revendications précédentes, caractérisé en ce que, dans le matériau polymère conducteur, la proportion de composé neutralisant additionnel est de 0,1 - 10 % en poids, calculée pour le CaCO₃.

12. Matériau polymère conducteur selon l'une quelconque des revendications précédentes, caractérisé en ce que le matériau polymère conducteur contient 4 - 20 % en poids de polyaniline, 60 - 90 % en poids d'acide protonique calculé pour l'acide dodécylbenzène sulfonique (correspondant à une quantité d'acide possédant une quantité de protons acides équivalente à celle d'un pourcentage en poids donné d'acide dodécylbenzène sulfonique) et 1 - 10 % en poids de composé de métal.

13. Matériau polymère conducteur d'électricité transformable, qui contient une polyaniline dopée ou un dérivé de celle-ci selon l'une quelconque des revendications précédentes, caractérisé en ce que le matériau polymère conducteur peut être combiné avec une matrice de polymère isolant pour obtenir un mélange plastique conducteur d'électricité.

14. Matériau polymère conducteur selon la revendication 13, caractérisé en ce que le polymère de matrice isolant peut être un polymère thermodurcissant, thermoplastique ou un polymère élastomère.

15. Matériau polymère conducteur selon la revendication 13 ou 14, caractérisé en ce que le polymère de matrice isolant est, de préférence, un homo- ou un copolymère thermoplastique à base d'oléfines, de styrène, de polymères vinyliques ou de polymères acryliques ou d'un mélange de ceux-ci, ou un polymère de condensation thermoplastique.

16. Matériau polymère conducteur selon la revendication 13, 14 ou 15, caractérisé en ce que, dans le mélange plastique conducteur d'électricité, la proportion de matériau polymère conducteur d'électricité est de 1 - 60 % en poids, de préférence de 1 - 40 % en poids et, encore mieux, de 5 - 15 % en poids.

17. Procédé de préparation d'un matériau polymère conducteur d'électricité qui contient une polyaniline ou un dérivé de celle-ci, dopé avec un acide protonique, et un composé de métal, caractérisé en ce qu'une polyaniline ou un dérivé de celle-ci, un acide protonique dopant du polymère, un composé de zinc en tant que dit composé de métal, un acide qui forme un composé avec le composé de métal et un composé neutralisant additionnel qui n'est pas un composé de zinc, sont mis en contact les uns avec les autres, et le mélange est soumis à un traitement thermique à une température de 50 °C - 400 °C, de préférence de 80 °C - 300 °C ou, encore mieux, de 100 °C - 200 °C.

18. Procédé selon la revendication 17, caractérisé en ce que le contact se fait au moyen d'un appareil de mélange et de fusion, tel qu'un mélangeur à vis ou un malaxeur.

19. Procédé selon la revendication 17 ou 18, caractérisé en ce que l'acide protonique dopant est, de préférence, un acide sulfonique ou un dérivé de celui-ci; l'acide qui forme un composé avec le composé de métal est, de préférence, le même que l'acide utilisé pour doper la polyaniline ou son dérivé; et le composé neutralisant additionnel est, de préférence, le carbonate de calcium.

20. Procédé selon la revendication 17, 18 ou 19 pour préparer un polymère conducteur d'électricité transformable, caractérisé en ce que le matériau polymère conducteur d'électricité est combiné avec une matrice de polymère isolant au moyen de dispositifs de mélange et de fusion, tels qu'un mélangeur à vis ou un malaxeur, à une température de 80 °C - 350 °C.

21. Matériau polymère conducteur d'électricité transformable selon l'une quelconque des revendications 1 - 16, caractérisé en ce que l'addition du composé neutralisant additionnel au matériau polymère conducteur améliore la résistance aux impacts du mélange plastique réalisé avec le matériau polymère conducteur et le polymère de matrice isolant par jusqu'à 30 %, quand le matériau polymère conducteur contient le composé neutralisant en une quantité égale à 2 % en poids ou moins.

22. Utilisation d'un matériau polymère conducteur d'électricité transformable selon l'une quelconque des revendications 1 à 16 et 21, dans les applications ou dispositifs électriques ou électroniques, tels que les batteries, les détecteurs, les commutateurs, les cellules à lumière, les cartes imprimées, les éléments chauffants, l'élimination de décharges électrostatiques ou la protection contre les interférences électromagnétiques.
